# EUROPÄISCHE PATENTSCHRIFT

(11) **EP 2 479 067 B1**
(45) Veröffentlichungstag und Bekanntmachung des Hinweises auf die Patenterteilung: **17.09.2014**
(21) Anmeldenummer: 11009879.5
(22) Anmeldetag: 15.12.2011
(51) Int. Cl.: B60R 11/02, F16B 47/00

(54) **Strömungsoptimiertes Gehäuse an der Frontschiebe eines Kraftfahrzeugs**
Flow optimised housing on the windscreen of a motor vehicle
Boîtier à flux optimisé sur la poussée avant d'un véhicule automobile

(30) Priorität: 20.01.2011 DE 102011008969
(43) Veröffentlichungstag der Anmeldung: 25.07.2012
(73) Patentinhaber: MAN Truck & Bus AG, 80995 München (DE)
(72) Erfinder: Rohrmüller, Hans, 82216 Maisach (DE); Gerlach, Günter, 85757 Karlsfefd (DE)

(56) Entgegenhaltungen:
- EP-A1- 1 855 019
- WO-A2-2004/103773
- DE-A1-102006 008 420
- DE-C1- 10 024 931
- US-A1- 2002 110 256
- US-A1- 2007 278 369
- US-B1- 7 363 148

## Beschreibung

Die Erfindung betrifft ein Innenraumelement eines Kraftfahrzeugs, insbesondere Nutzfahrzeugs, mit einem Gehäuse, in dem wenigstens ein elektrisches und/oder elektronisches Funktionsbauteil vorgesehen oder integriert ist und das im Innenraum des Kraftfahrzeugs, insbesondere Nutzfahrzeugs, an oder hinter einer Innenseite einer Fahrzeugfrontscheibe in einem Bereich, durch den zumindest zeitweise aus zumindest einer Luftdüse ein wenigstens abschnittsweise auf die Innenseite der Fahrzeugfrontscheibe gerichteter Luftstrom strömt, angeordnet ist.

Auf dem Gebiet der Fahrzeugtechnik ist eine Vielzahl elektrischer sowie elektronischer Bauteile bekannt, die von innen an oder hinter der Fahrzeugfrontscheibe befestigt werden. Bei derartigen Bauteilen handelt es sich in Abhängigkeit der jeweiligen Fahrzeugausstattung beispielsweise um Kameras, Sensoren, Chipkartenleser, Kompasssysteme, Navigationssysteme, Uhren, Antennen und/oder Systemelemente für eine Mauterkennung, etc. In diesem Zusammenhang werden beispielsweise bei Nutzfahrzeugen, insbesondere bei schweren Lastkraftwagen sowie Omnibussen, an oder hinter der Innenseite einer Fahrzeugfrontscheibe oftmals Sensorelemente für automatische Abstandsregelungssysteme (ACC) und/oder für Spurerkennungs- bzw. Spurhaltesysteme (Lane Guard System) angebracht.

Die Anbringung elektrischer oder elektronischer Bauteile an oder hinter der Innenseite einer Fahrzeugfrontscheibe bietet vor allem den Vorteil, dass Beschädigungen der Bauteile weitgehend vermieden werden. Außerdem werden insbesondere für optische Sensoren und Kameras in der Regel keine zusätzlichen Vorrichtungen zur Reinigung des Sichtfeldes benötigt, da diese Bauteile üblicherweise im Wischfeld der auf der Außenseite einer Fahrzeugfrontscheibe vorgesehenen Scheibenwischer liegen. Auch die bei Lastkraftwagen oftmals an oder hinter der Innenseite der Fahrzeugfrontscheibe vorgesehenen Sensoren, Kameras oder Transmitter werden bevorzugt im Bereich des Wischfeldes und hier im unteren Bereich der Fahrzeugfrontscheibe angebracht.

In diesem Zusammenhang ist aus der DE 10 2007 012 993 A1 ein System zum Montieren einer Kamera innerhalb eines Fahrzeugs bekannt. Bei der beschriebenen technischen Lösung wird die Kamera innerhalb des Fahrzeugs hinter einem speziellen, in die Fahrzeugfrontscheibe eingelassenen, Infrarotstrahlung durchlässigen Fenster angeordnet. Die Kamera wird gegenüber dem Fahrgastraum mittels eines Gehäuses abgedeckt, wobei sie zwischen der Fahrzeugfrontscheibe und dem Gehäuse derart platziert wird, dass das Sichtfeld der Kamera durch das Infrarotstrahlung durchlässige Fenster gerichtet ist. Das verwendete Gehäuse ist L-förmig ausgeführt und wird in einem oberen Bereich der Fahrzeugfrontscheibe an der Fahrzeugfrontscheibe anliegend am Dachhimmel befestigt. Auch hier liegt das Sichtfeld der Kamera im Wischfeld des Scheibenwischers, so dass es stets von Schmutz freigehalten werden kann.

Weiterhin ist aus der DE 10 2005 002 686 A1 ein hinter einer Fahrzeugscheibe angeordnetes Gehäuse bekannt, das eine Kamera, Sensoren für Chipkarten oder andere Systeme aufnehmen kann. Das beschriebene Gehäuse zeichnet sich vor allem dadurch aus, dass es über eine Klappe verfügt, die auf einfache Weise den Innenraum des Gehäuses zugänglich macht, um beispielsweise die Fahrzeugscheibe hinter dem Gehäuse zu reinigen oder innerhalb des Gehäuses angeordnete Bauteile zu reparieren oder auszutauschen. Das Gehäuse ist direkt an der Innenseite einer Fahrzeugfrontscheibe angeordnet, wobei sich eine Querschnittsfläche in Richtung des Dachhimmels stark vergrößert.

Problematisch an der Befestigung von elektrischen oder elektronischen Bauteilen bzw. deren Gehäusen im Bereich der Innenseite von Fahrzeugfrontscheiben ist nicht nur, dass sie das Sichtfeld des Fahrers einschränken, sondern auch, dass sie direkt im Strömungsbereich der Luftdüsen, die Frischluft auf die Innenseite der Fahrzeugfrontscheibe leiten, angeordnet sind. Die auf die Innenseite einer Fahrzeugfrontscheibe geleitete Frischluft ist hinsichtlich ihrer Zustandsparameter üblicherweise derart konditioniert, dass die Scheibeninnenseite frei von Wasser gehalten wird bzw. eine Bildung von Eis, insbesondere auf der Scheibenaußenseite, vermieden wird. Hierbei erfolgt eine Frontscheibenentfrostung üblicherweise durch einen klimatisierten Luftstrom, der aus Luftdüsen bzw. Luftausströmöffnungen, die in unmittelbarer Nähe der Frontscheibe an der Instrumententafel oder einer daran anschließenden Blende angebracht sind, austritt und entlang der Frontscheibe nach oben strömt. Bauteile bzw. deren Gehäuse, die sich im direkten Luftstrom entlang der Innenseite der Frontscheibe befinden, beeinflussen diesen Luftstrom teilweise erheblich auf negative Weise.

Aufgrund der üblicherweise lediglich im Hinblick auf die Unterbringungsmöglichkeit von elektrischen und/oder elektronischen Bauteilen sowie auf eine minimale Einschränkung des Sichtfeldes eines Fahrzeugführers ausgelegten Gehäusegeometrien, treten oftmals Probleme bei der Scheibenentfrostung, Scheibenenttauung oder sogar bei der Scheibenbeheizung auf. Diese Probleme können so weit führen, dass es zumindest in bestimmten Bereichen der Fahrzeugfrontscheibe bei entsprechenden Bedingungen zu einer unerwünschten Eisschichtbildung an der Außenseite der Frontscheibe kommt.

Ausgehend von den aus dem Stand der Technik bekannten technischen Lösungen sowie den Problemen der bekannten Systeme liegt der Erfindung die Aufgabe zugrunde, ein Innenraumelement mit elektrischen und/oder elektronischen Bauteilen anzugeben, durch die die Luftströmung entlang der Innenseite einer Fahrzeugfrontscheibe nicht oder zumindest nur minimal beeinflusst wird. Die anzugebende Lösung soll insbesondere sicherstellen, dass einerseits die Luftströmung entlang der Innenseite der Fahrzeugfrontscheibe geringstmöglich gestört wird und andererseits, dass Bereiche, die nicht vom Luftstrom umströmt werden, möglichst klein gehalten werden. Auf diese Weise soll sichergestellt werden, dass zu jeder Zeit, trotz des Vorsehens der oftmals unabdingbaren elektrischen oder elektronischen Bauteile an der Innenseite einer Fahrzeugfrontscheibe, eine sichere Entfrostung, Enttauung sowie Beheizung der Fahrzeugfrontscheibe gewährleistet ist.

Die vorstehend geschilderte Aufgabe wird mit Hilfe eines Innenraumelements gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist ein Innenraumelement eines Kraftfahrzeugs oder für ein Kraftfahrzeug mit einem Gehäuse, in dem wenigstens ein elektrisches und/oder elektronisches Funktionsbauteil vorgesehen ist und das im Innenraum des Kraftfahrzeugs an oder hinter einer Innenseite einer Fahrzeugfrontscheibe in einem Bereich angeordnet ist, durch den zumindest zeitweise aus zumindest einer Luftdüse ein wenigstens abschnittsweise auf die Innenseite der Fahrzeugfrontscheibe gerichteter Luftstrom strömt, derart weitergebildet, dass das Gehäuse eine im Hinblick auf die Umströmung durch den auf die Innenseite der Fahrzeugfrontscheibe gerichteten Luftstrom strömungstechnisch optimierte und/oder abgerundete Außenkontur aufweist, deren von einem entlang oder zumindest nahezu parallel zur Fahrzeugfrontscheibe strömenden Teil des Luftstroms angeströmte Querschnittsfläche größer als eine im Abströmbereich des Gehäuses liegende Querschnittsfläche ist.

Vorzugsweise wird die Optimierung des Gehäuses im Hinblick auf die strömungstechnische Auslegung derart ausgeführt, dass eine Erstreckung der Außenkontur quer zu einem entlang oder zumindest nahezu parallel zur Fahrzeugfrontscheibe strömenden Teil des Luftstroms kleiner als in Strömungsrichtung ist. In diesem Fall zeichnet sich das erfindungsgemäße Innenraumelement mit einem Gehäuse, in dem ein elektrisches und/oder elektronisches Funktionsbauteil vorgesehen ist, dadurch aus, dass die Außenkontur in Längsrichtung der Luftströmung im Vergleich zu seiner Querschnittsfläche verhältnismäßig lang gestreckt ist. Die quer zum Luftstrom bzw. zur Luftströmung ausgerichtete Anströmfläche weist gleichermaßen eine schlanke Außenkontur auf.

In einer speziellen Ausführungsform der Erfindung weist das Gehäuse eine zumindest teilweise oder zumindest abschnittsweise tropfenförmige Außenkontur auf. Hierbei verfügt das erfindungsgemäß ausgeführte Innenraumelement bzw. sein Gehäuse über eine Tropfenform, deren Querschnittsfläche sich längs der Strömungsrichtung des Luftstroms stetig verändert und sich insbesondere im Abströmbereich des Gehäuses stark verkleinert. Bevorzugt ist am oberen, dem Dachhimmel zugewandten Ende des Gehäuses eine abgerundete Kante vorgesehen, die zumindest nahezu senkrecht zur Windschutzscheibe angeordnet ist und in der die Seitenwandflächen des Gehäuses zusammenlaufen. Alternativ ist es ebenfalls denkbar, im Abströmbereich des Gehäuses eine Abrissfläche oder eine Abrissfläche mit in geeigneter Weise ausgeführten Ausrundungen bzw. Formen vorzusehen. Als mögliche Formen sind beispielsweise die aus dem Karosseriebau bekannten Kamm- oder Jaraykonturen, wie sie insbesondere für Fahrzeughecks verwendet werden, denkbar. Weiterhin können wahlweise einzelne Flächen, insbesondere die beiden den Außenseiten der Fahrzeugfrontscheibe bzw. den A-Säulen zugewandten Seitenflächen, des Gehäuses oder auch das gesamte Gehäuse tropfenförmig konturiert sein. Wesentlich ist jeweils, dass eine Verjüngung der Außenkontur des Gehäuses in Strömungsrichtung des entlang der Scheibe strömenden Luftstroms erfolgt, so dass die das Gehäuse umströmenden Teilluftströme im Abströmbereich des Gehäuses derart zusammengeführt werden, dass hier kein Abriss der Strömung mit der damit einhergehenden Wirbelbildung auftritt. Die obere Abschlusskante des Gehäuses, die eine Abrisskante bildet, ist daher derart ausgeführt, dass wenigstens zwei der das Gehäuse umströmenden Teilluftströme in Lee dieser Kante unter einem möglichst spitzen Winkel zusammengeführt werden.

Die Geometrie der Außenkontur des Gehäuses kann ferner im Hinblick auf die Umströmung durch den nahezu parallel zur Fahrzeugfrontscheibe strömenden Luftstrom mit optimierten Radien ausgeführt sein. Unter einer teilweisen Tropfenform, die gemäß einer bevorzugten Ausführungsform der Erfindung realisiert wird, ist zu verstehen, dass das Gehäuse nicht vollumfänglich eine Tropfenform aufweist, weil es beispielsweise in seinem den Luftaustrittsdüsen zugewandten Bereich an eine Instrumententafel oder an ein daran anschließendes Bauteil, insbesondere Interieurbauteil, angrenzt. In diesem Fall kann ferner das Gehäuse vorzugsweise direkt an der Instrumententafel oder dem daran anschließenden Bauteil, insbesondere Interieurbauteil, befestigt sein, so dass die Fläche der Instrumententafel direkt in die Außenwand des Gehäuses übergeht.

In einer weiteren Ausführungsform kann das Gehäuse an der Fahrzeugfrontscheibe befestigt sein, beispielsweise mittels einer Klebverbindung bzw. Haftverbindung.

Alternativ ist es selbstverständlich ebenfalls denkbar, dass das Gehäuse des Innenraumelements mit Hilfe eines geeignet ausgeführten Halters, Sockels und/oder eines Bauteilfußes an der Instrumententafel bzw. dem daran angrenzenden Bauteil, insbesondere Interieurbauteil, befestigt ist.

Bei einer derartigen Ausführung bzw. Befestigung des Innenraumelements ist es besonders vorteilhaft, wenn auch der Halter, Sockel und/oder der Bauteilfuß im Hinblick auf die strömungstechnische Auslegung optimiert ausgeführt sind oder über entsprechend geeignete strömungsoptimiert ausgeführte Verkleidungselemente verfügen.

Eine weitere bevorzugte Ausführungsform sieht vor, dass das Gehäuse des Innenraumelements über eine Leitungszuführung verfügt, die an das Gehäuse angeschlossen ist und die elektrischen und/oder elektronischen Bauteile mit Energie versorgt und/oder einer Datenübertragung dient.

Auf geeignete Weise wird auch eine derartige Leitungszuführung in Bezug auf den zumindest nahezu parallel zur Innenseite der Fahrzeugfrontscheibe strömenden Luftstrom strömungsoptimiert ausgeführt oder ist von einem strömungsoptimiert ausgeführten Verkleidungselement umgeben.

In einem Gehäuse gemäß der Erfindung können wahlweise ein oder auch mehrere elektrische und/oder elektronische Bauteile vorgesehen sein. Gemäß einer vorteilhaften Weiterbildung ist in diesem Zusammenhang vorgesehen, dass das Gehäuse auf einer Innenseite der der Fahrzeugfrontscheibe zugewandten Seite wenigstens eine Öffnung für ein Sensorelement des wenigstens einen elektrischen oder elektronischen Funktionsbauteils aufweist. Die vorgesehene Öffnung dient beispielsweise optischen Sensoren als Sichtfeld, das durch die Fahrzeugscheibe auf die Straße vor dem Fahrzeug gerichtet ist. Sofern mehrere Bauteile innerhalb eines strömungstechnisch optimierten Gehäuses vorgesehen sind, sind diese vorzugsweise übereinander angeordnet, um so eine quer zur Anströmrichtung des Luftstroms schlank sowie in Strömungsrichtung länglich ausgeführte Gehäusekontur zu realisieren.

In einer weiteren Ausführungsform der vorliegenden Erfindung weist das Gehäuse im Abströmbereich eine Abrissfläche auf, an der zumindest zeitweise eine nahezu wirbelfreie Ablösung der Luftströmung erfolgen kann.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Figur 1:: Instrumententafel mit angrenzendem Bauteil und darauf angeordnetem Funktionsbauteil mit einem optischen Sensor aus dem Stand der Technik,sowie
- Figur 2:: Instrumententafel mit angrenzendem Bauteil und darauf angeordnetem Gehäuse, in dem zwei elektronische Funktionsbauteile angeordnet sind.

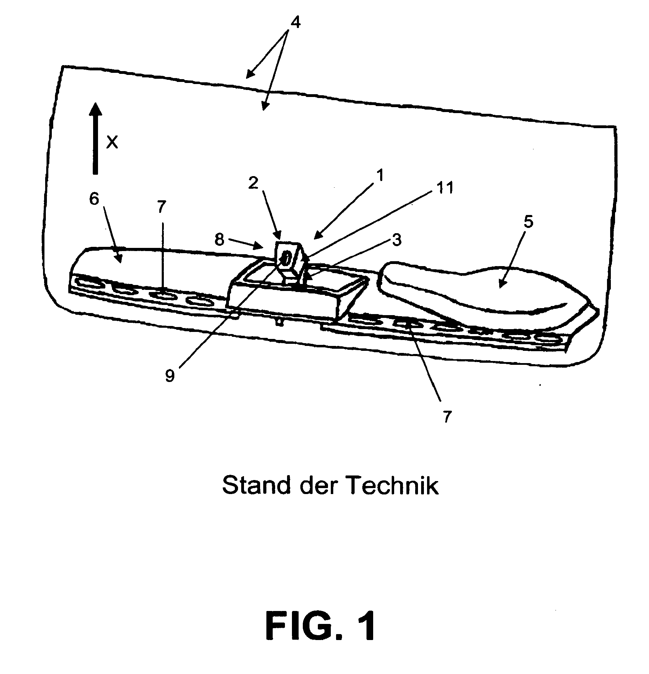

Figur 1 zeigt ein Innenraumelement 1 eines Nutzfahrzeugfahrerhauses (nicht in Figur 1 dargestellt), wie es aus dem Stand der Technik bekannt ist. Die Darstellung erfolgt in einer Ansicht mit Blickrichtung von vorne durch die Fahrzeugfrontscheibe 4 des Nutzfahrzeugfahrerhauses auf eine Instrumententafel 5 mit daran angrenzendem Bauteil bzw. Interieurbauteil 6. Die Instrumententafel 5 mit dem daran angrenzenden Interieurbauteil 6 verfügt im vorderen Bereich über Luftdüsen bzw. geeignet ausgeführte Luftstromaustrittsöffnungen 7, die nahezu parallel zur Innenseite der Fahrzeugfrontscheibe 4 angeordnet sind. Im mittleren Teil des Interieurbauteils 6 ist ein Funktionsbauteil 8 mit einem Sensorelement 9, insbesondere einem optischen Sensor 9, das in einem Gehäuse 2 angeordnet ist, vorgesehen. Bei dem dargestellten elektronischen Bauteil 8 handelt es sich beispielsweise um eine Kamera eines Spurerkennungssystems.

Mit Hilfe einer derartigen Kamera 8 werden die die Fahrbahn begrenzenden Markierungen erfasst, um auf der Grundlage entsprechender Daten mit Hilfe einer Auswerte- und/oder Regeleinheit eines entsprechenden Systems eine automatische Spurerkennung und/oder eine Spurhaltung zu realisieren.

Im unteren Bereich des Gehäuses 2 ist ein Bauteilfuß 3 vorgesehen, über den die Kamera 8 mit ihrem Gehäuse 2 am Interieurbauteil 6 des Nutzfahrzeugfahrerhauses befestigt ist. Deutlich zu erkennen ist hierbei, dass das Gehäuse 2 über eine vergleichsweise kantige Außenkontur verfügt (vgl. beispielsweise Seitenfläche 11) und auch der Bauteilfuß 3 Bereiche aufweist, in denen eine Luftströmung nicht geführt wird, sondern es vielmehr zu Verwirbelungen der Luftströmung kommen kann.

Der aus den Luftdüsen und/oder aus geeigneten Luftstromaustrittsöffnungen 7 austretende Luftstrom wird zumindest teilweise auf die Innenseite der Fahrzeugfrontscheibe 4 gerichtet. Der Luftstrom oder zumindest ein Teil dieses Luftstroms strömt somit ausgehend von den Luftdüsen bzw. Luftstromaustrittsöffnungen 7 entlang der Innenseite der Fahrzeugfrontscheibe 4 und/oder zumindest nahezu parallel hierzu nach oben in Richtung X der oberen Seitenkante der Fahrzeugfrontscheibe 4. Mit der Seitenkante grenzt die Fahrzeugfrontscheibe 4 üblicherweise an einen Fensterholm (nicht in Figur 1 dargestellt) an.

Ein Fahrzeugführer kann in Abhängigkeit der Umgebungsbedingungen sowie des persönlichen Komfortbedarfs sowohl die Temperatur als auch den Volumenstrom der Luftströmung regeln. Vielfach sind ergänzend zu einer manuellen Regelung auch automatische Regelungssysteme vorgesehen, die in Abhängigkeit der Umgebungsbedingungen die Parameter der aus den Luftdüsen bzw. Luftstromaustrittsöffnungen 7 ausströmenden Luft gezielt einstellen. So erfolgt beispielsweise die Frontscheibenentfrostung durch einen hinsichtlich seiner Zustandsparameter mit Hilfe einer Fahrzeugklimaanlage auf geeignete Weise konditionierten Luftstroms. Unter Konditionierung des Luftstroms wird in diesem Zusammenhang verstanden, dass der Luftstrom nicht nur unterschiedlich temperiert werden kann sondern auch sein Feuchtegehalt teilweise gezielt eingestellt wird.

Das Vorsehen einer Kameraeinheit bzw. Kamera 8 im Strömungsbereich, der aus den Luftaustrittsöffnungen 7 ausströmenden Luft bewirkt eine Störung des über die Innenseite der Fahrzeugfrontscheibe 4 oder zumindest nahezu parallel hierzu geleiteten Luftstroms. Dies kann dazu führen, dass eine Entfrostung bzw. Defrostung, Enttauung und/oder eine Beheizung der Fahrzeugfrontscheibe 4 nicht in dem erforderlichen Maß erfolgt. Insbesondere können entweder zeitliche Verzögerungen bei der Entfrostung oder der Enttauung der Fahrzeugfrontscheibe 4 auftreten oder einzelne Bereiche der Fahrzeugfrontscheibe 4 werden überhaupt nicht mit einem entsprechend konditionierten Luftstrom beaufschlagt. Die Störung der Luftströmung aufgrund der im Bereich der Innenseite der Fahrzeugfrontscheibe 4 angeordneten Bauteile 3, 8 kann soweit führen, dass eine Beheizung der Fahrzeugfrontscheibe 4, insbesondere bei tiefen Außentemperaturen, nicht in dem erforderlichen Maße erfolgt und es zu einer Eisschichtbildung an der Außenseite der Fahrzeugfrontscheibe 4 kommt. Dies führt zu einer Sichtbehinderung des Fahrzeugführers und letztendlich zu einer Gefährdung des Fahrbetriebs, vor allem kurz nach einem Kaltstart des Fahrzeugs.

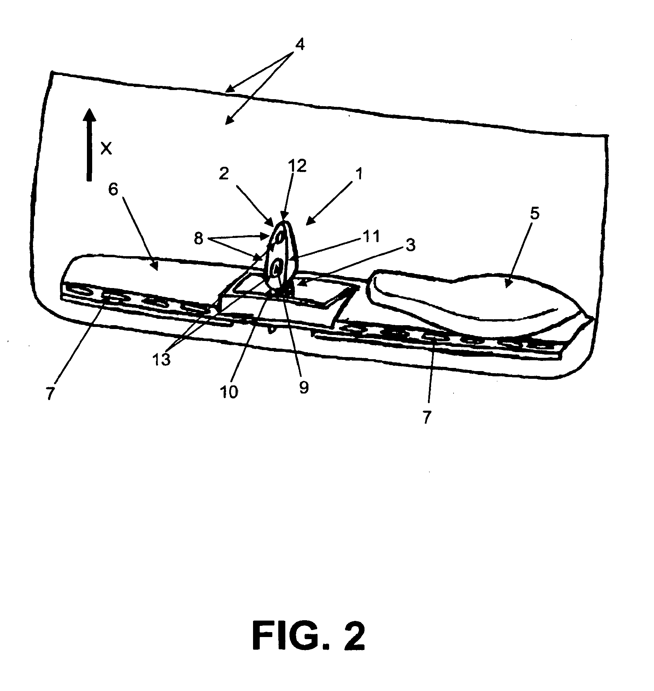

In Figur 2 ist das erfindungsgemäße Innenraumelement 1 in einer Ausführungsform dargestellt. Das Innenraumelement 1 weist ein Gehäuse 2 und zwei darin angeordnete Kameras 8 als Funktionslemente 8 auf. Die Kameras 8 weisen jeweils zumindest ein Sensorelement 9 auf. Im Gegensatz zu den aus dem Stand der Technik bekannten technischen Lösungen ist das Gehäuse 2 im Hinblick auf die Luftströmung, die entlang der Innenseite der Fahrzeugfrontscheibe 4 strömt, strömungstechnisch optimiert ausgeführt. Das in Figur 2 dargestellte Gehäuse 2 zeichnet sich vor allem dadurch aus, dass die Außenkontur in Strömungsrichtung des Luftstroms vergleichsweise langgestreckt und das Gehäuse 2 in seinem Abströmbereich 12 schlank ausgebildet ist.

Das dargestellte Gehäuse 2 ist tropfenförmig ausgeführt, wobei Querschnitte und/oder Konturabschnitte mit optimierten Radien gewählt worden sind. Das Gehäuse 2 kann auch zumindest abschnittsweise tropfenförmig oder zumindest abschnittsweise kegelförmig oder zumindest abschnittsweise kugelförmig ausgebildet sein. Insbesondere sind die Seitenflächen 11 des Gehäuses 2 in Figur 2 derart der Kontur eines Tropfens nachempfunden, dass sie in einer abgerundeten Abschlusskante im Abströmbereich 12 zusammenlaufen. Durch die Verjüngung des Gehäusequerschnitts in Richtung des Abströmbereichs 12 und die gleichermaßen abgerundete Form der Abschlusskante wird sichergestellt, dass insbesondere die entlang der Seitenflächen 11 des Gehäuses 2 umströmenden Teilluftströme hinter der Abschlusskante, in Lee des Gehäuses 2, unter Einschluss eines spitzen Winkels zusammengeführt werden. Der Abströmbereich 12 des Gehäuses 2 stellt den schmalsten Bereich, also den Bereich mit der kleinsten Querschnittsfläche des Gehäuses 2 dar.

Sowohl der Anströmbereich 10 als auch die Abschlusskante im Abströmbereich 12 des Gehäuses 2 sind abgerundet ausgeführt. Wesentlich hierbei ist, dass der Radius der Gehäusekontur im Anströmbereich 10 größer gewählt ist als der Radius der Außenkontur im Abströmbereich 12. Auf diese Weise wird gleichzeitig eine geeignete Umströmung des Gehäuses 2 sowie eine Minimierung der Strömungsverluste im Abströmbereich 12, insbesondere durch eine weitgehende Verhinderung der Wirbelbildung hinter der abgerundeten Abschlusskante, erreicht.

Das Gehäuse 2 verfügt in seinem Anströmbereich 10 über einen kleinen Sockel 3, der das Innenraumelement 1 mit dem Interieurbauelement 6 des Nutzfahrzeugfahrerhauses (nicht in Figur 2 dargestellt) verbindet. Die Außenkontur des Sockels 3 ist an die Gehäuseaußenkontur des Gehäuses 2 angepasst, so dass die Außenhaut des Sockels 3 direkt in die Oberfläche des Gehäuses 2 übergeht. Auch der Übergangsbereich zwischen dem Interieurbauelement 6 und dem Gehäuse 2 ist derart ausgeführt, dass die Luftströmung zumindest nahezu störungs- bzw. wirbelfrei entlang der umströmten Oberflächen strömen kann.

Auf der der Fahrzeugfrontscheibe 4 zugewandten Seite des Gehäuses 2 sind zwei übereinander angeordnete Öffnungen 13 vorgesehen. Unmittelbar hinter diesen Öffnungen 13 sind die Optiken bzw. die optischen Sensoren 9 der Kamera 8 eines Spurerkennungs- bzw. Spurhaltesystems (Lane Guard System) sowie der Kamera 8 einer Abstandsregelung (ACC) angeordnet. Die Öffnungen 13 bilden hiermit den Ausgangspunkt für das Sichtfeld der beiden Kameras 8 auf die vor dem Fahrzeug (nicht in Figur 2 dargestellt), hier einem Nutzfahrzeug, befindliche Straße. Die in dem erfindungsgemäß ausgeführten Gehäuse 2 vorgesehenen Kameras 8 sind übereinander angeordnet. Durch diese Anordnung wird wiederum sicher gestellt, dass das Gehäuse 2 über eine schlanke und langgestreckte Außenkontur verfügt. Hierbei ist die Erstreckung des Gehäuses 2 in Strömungsrichtung größer als quer zur Luftströmung.

Das Innenraumelement 1 mit dem Gehäuse 2 und den beiden darin angeordneten Kameras 8 ist ferner derart hinter der Fahrzeugfrontscheibe 4 positioniert, dass der aus den Luftdüsen bzw. Luftaustrittsöffnungen 7 austretende und entlang der Innenseite der Fahrzeugfrontscheibe 4 strömende Luftstrom nahezu nicht negativ beeinflusst wird. Die Positionierung der Luftaustrittsöffnungen 7 ist hierfür auf vorteilhafte Weise mit der Positionierung des Innenraumelements 1 abgestimmt. Die der Fahrzeugfrontscheibe 4 zugewandte Oberfläche des Gehäuses 2 verläuft zumindest nahezu parallel zur Innenseite der Fahrzeugfrontscheibe 4. Das Gehäuse 2 schließt an die Fahrzeugfrontscheibe 4 an, wobei zwischen der Fahrzeugfrontscheibe und dem Gehäuse eine Dichtung (nicht in Figur 2 dargestellt) vorgesehen ist. Alternativ ist es denkbar, das Gehäuse 2 vollflächig auf die Scheibe aufzukleben. An den nicht der Fahrzeugfrontscheibe 4 zugewandten Flächen, insbesondere der Seitenfläche 11, wird das Gehäuse 2 durch den aus den Luftaustrittsöffnungen 7 austretenden Luftstrom umströmt, wobei gleichzeitig eine zuverlässige Überströmung der Innenseite der Fahrzeugfrontscheibe 4 sichergestellt ist.

Die erfindungsgemäße technische Lösung stellt auf besondere Weise ein Innenraumelement 1 mit einem Gehäuse 2 zur Verfügung, dass die Anordnung elektrischer und/oder elektronischer Bauteile 8 hinter der Fahrzeugfrontscheibe 4 ermöglicht, ohne dass hierdurch der entlang der Innenseite der Fahrzeugfrontscheibe 4 strömende Luftstrom nachhaltig gestört wird. Eine bei jedem Betriebszustand ausreichende Belüftung der Fahrzeugfrontscheibe 4, insbesondere zur Enttauung, Entfrostung bzw. Defrostung und/oder zur Beheizung, wird somit zuverlässig sichergestellt.

### Bezugszeichenliste

- 1: Innenraumelement
- 2: Gehäuse
- 3: Bauteilfuß
- 4: Fahrzeugfrontscheibe
- 5: Instrumententafel
- 6: Interieurbauelement
- 7: Luftaustrittsöffnung
- 8: Funktionselement, Kamera
- 9: Sensorelement, insbesondere optischer Sensor
- 10: Anströmbereich
- 11: Seitenfläche/n
- 12: Abströmbereich bzw. Abschlusskante
- 13: Öffnung

## Patentansprüche

1. Innenraumelement (1) eines Kraftfahrzeugs mit einem Gehäuse (2), in dem wenigstens ein elektrisches und/oder elektronisches Funktionsbauteil (8) vorgesehen ist und das im Innenraum des Kraftfahrzeugs an oder hinter einer Innenseite einer Fahrzeugfrontscheibe (4) in einem Bereich, durch den zumindest zeitweise aus zumindest einer Luftsaustrittsöffnung (7) ein wenigstens abschnittsweise auf die Innenseite der Fahrzeugfrontscheibe (4) gerichteter Luftstrom strömt, angeordnet ist,
**dadurch gekennzeichnet, dass** das Gehäuse (2) eine im Hinblick auf die Umströmung durch den auf die Innenseite der Fahrzeugfrontscheibe (4) gerichteten Luftstrom strömungstechnisch optimierte Außenkontur (11) aufweist, deren von einem entlang oder zumindest nahezu parallel zur Fahrzeugfrontscheibe (4) strömenden Teil des Luftstroms angeströmte Querschnittsfläche (10) größer als eine im Abströmbereich (12) liegende Querschnittsfläche ist.

2. Innenraumelement (1) nach Anspruch 1,
**dadurch gekennzeichnet, dass** eine Erstreckung der Außenkontur (11) quer zu einem entlang oder zumindest nahezu parallel zur Fahrzeugfrontscheibe (4) strömenden Teil des Luftstroms kleiner als in Strömungsrichtung ist.

3. Innenraumelement (1) nach Anspruch 1 oder 2,
**dadurch gekennzeichnet, dass** das Gehäuse (2) eine zumindest teilweise tropfenförmige Außenkontur aufweist.

4. Innenraumelement (1) nach einem der Ansprüche 1 bis 3,
**dadurch gekennzeichnet, dass** das Gehäuse (2) an eine Instrumententafel (5) oder ein daran anschließendes Interieurbauteil (6) angrenzt.

5. Innenraumelement (1) nach einem der Ansprüche 1 bis 4,
**dadurch gekennzeichnet, dass** das Gehäuse (2) an einer Instrumententafel (5) oder einem daran anschließenden Interieurbauteil (6) befestigt ist.

6. Innenraumelement (1) nach einem der Ansprüche 1 bis 4,
**dadurch gekennzeichnet, dass** das Gehäuse (2) an der Fahrzeugfrontscheibe (4) befestigt ist.

7. Innenraumelement (1) nach einem der Ansprüche 1 bis 6,
**dadurch gekennzeichnet, dass** das Gehäuse (2) einen außenseitig befestigten Halter, Sockel und/oder Bauteilfuß (3) aufweist.

8. Innenraumelement (1) nach einem der Ansprüche 1 bis 7,
**dadurch gekennzeichnet, dass** an das Gehäuse (2) eine Leitungszuführung angeschlossen ist.

9. Innenraumelement (1) nach Anspruch 7 oder 8,
**dadurch gekennzeichnet, dass** die Leitungszuführung, der Halter, der Sockel und/oder der Bauteilfuß (3) in Bezug auf den auf die Innenseite der Fahrzeugfrontscheibe (4) gerichteten Luftstrom strömungsoptimiert ausgeführt sind oder über ein strömungsoptimiert ausgeführtes Verkleidungselement verfügen.

10. Innenraumelement (1) nach einem der Ansprüche 1 bis 9,
**dadurch gekennzeichnet, dass** das Gehäuse (2) auf einer der Fahrzeugfrontscheibe (4) zugewandten Seite wenigstens eine Öffnung (13) für ein Sensorelement (9) des wenigstens einen elektrischen oder elektronischen Funktionsbauteils (8) aufweist.

11. Innenraumelement (1) nach einem der Ansprüche 1 bis 10,
**dadurch gekennzeichnet, dass** das Gehäuse (2) im Abströmbereich (12) eine Abrissfläche aufweist, an der zumindest zeitweise eine nahezu wirbelfreie Ablösung der Luftströmung erfolgt.

## Claims

1. A passenger compartment element (1) of a motor vehicle having a housing (2), in which at least one electric and/or electronic functional component (8) is provided and which is arranged in the passenger compartment of the motor vehicle, on or behind an inner side of a vehicle front windscreen (4) in a region through which an airstream which is directed at least in certain sections onto the inner side of the vehicle front windscreen (4) flows from at least one air outlet opening (7) at least temporarily,
**characterized in that** the housing (2) has an outer contour (11) which is fluidically optimized with respect to its being flowed around by the airstream directed onto the inner side of the vehicle front windscreen (4), the cross-sectional surface (10) of said outer contour (11), against which cross-sectional surface (10) a part of the airstream flowing along or at least virtually parallel to the vehicle front windscreen (4) flows, is larger than a cross-sectional surface lying in the flow-off region (12).

2. The passenger compartment element (1) according to Claim 1,
**characterized in that** an extent of the outer contour (11) in the transverse direction with respect to a part of the airstream flowing along or at least virtually parallel to the vehicle front windscreen (4) is smaller than in the direction of flow.

3. The passenger compartment element (1) according to Claim 1 or 2,
**characterized in that** the housing (2) has an at least partially droplet-shaped outer contour.

4. The passenger compartment element (1) according to one of Claims 1 to 3,
**characterized in that** the housing (2) adjoins an instrument panel (5) or an interior component (6) which adjoins the latter.

5. The passenger compartment element (1) according to one of Claims 1 to 4,
**characterized in that** the housing (2) is attached to an instrument panel (5) or to an interior component (6) which adjoins the latter.

6. The passenger compartment element (1) according to one of Claims 1 to 4,
**characterized in that** the housing (2) is attached to the vehicle front windscreen (4).

7. The passenger compartment element (1) according to one of Claims 1 to 6,
**characterized in that** the housing (2) has a holder, base and/or component foot (3) which is attached on the outside.

8. The passenger compartment element (1) according to one of Claims 1 to 7,
**characterized in that** a line feed is connected to the housing (2).

9. The passenger compartment element (1) according to Claim 7 or 8,
**characterized in that** the line feed, the holder, the base and/or the component foot (3) are of flow-optimized design with respect to the airstream directed onto the inside of the vehicle front windscreen (4), or have a lining element which is of flow-optimized design.

10. The passenger compartment element (1) according to one of Claims 1 to 9,
**characterized in that** the housing (2) has, on a side facing the vehicle front windscreen (4), at least one opening (13) for a sensor element (9) of the at least one electric or electronic functional component (8).

11. The passenger compartment element (1) according to one of Claims 1 to 10,
**characterized in that** the housing (2) has, in the flow-off region (12), a spoiler surface at which virtually eddy-free detachment of the airflow takes place at least temporarily.

## Revendications

1. Élément d'habitacle (1) d'un véhicule automobile, comprenant un boîtier (2) dans lequel est prévu au moins un composant fonctionnel électrique et/ou électronique (8) et qui est disposé dans l'habitacle du véhicule automobile au niveau d'un côté interne ou derrière un côté interne d'une vitre avant du véhicule (4) dans une région à travers laquelle s'écoule au moins temporairement à partir d'au moins une ouverture de sortie d'air (7) un flux d'air orienté au moins en partie vers le côté interne de la vitre avant du véhicule (4),
**caractérisé en ce que** le boîtier (2) présente un contour extérieur (11) optimisé du point de vue de la technique d'écoulement en termes de circulation du flux d'air orienté vers le côté interne de la vitre avant du véhicule (4), dont la surface en section transversale (10) parcourue par une partie du flux d'air s'écoulant le long de la vitre avant du véhicule (4) ou au moins pratiquement parallèlement à celle-ci est supérieure à une surface en section transversale située dans une région de sortie de l'écoulement (12).

2. Élément d'habitacle (1) selon la revendication 1,
**caractérisé en ce qu'**une étendue du contour extérieur (11) transversalement à une partie du flux d'air s'écoulant le long de la vitre avant du véhicule (4) ou au moins pratiquement parallèlement à celle-ci est inférieure à son étendue dans la direction de l'écoulement.

3. Élément d'habitacle (1) selon la revendication 1 ou 2,
**caractérisé en ce que** le boîtier (2) présente un contour extérieur au moins en partie en forme de goutte.

4. Élément d'habitacle (1) selon l'une quelconque des revendications 1 à 3,
**caractérisé en ce que** le boîtier (2) est adjacent à un tableau de bord (5) ou à un composant intérieur (6) s'y raccordant.

5. Élément d'habitacle (1) selon l'une quelconque des revendications 1 à 4,
**caractérisé en ce que** le boîtier (2) est fixé à un tableau de bord (5) ou à un composant intérieur (6) s'y raccordant.

6. Élément d'habitacle (1) selon l'une quelconque des revendications 1 à 4,
**caractérisé en ce que** le boîtier (2) est fixé à la vitre avant du véhicule (4).

7. Élément d'habitacle (1) selon l'une quelconque des revendications 1 à 6,
**caractérisé en ce que** le boîtier (2) présente, fixés du côté extérieur, un dispositif de support, un socle et/ou une base de composant (3).

8. Élément d'habitacle (1) selon l'une quelconque des revendications 1 à 7,
**caractérisé en ce qu'**un passage de conduite est raccordé au boîtier (2).

9. Élément d'habitacle (1) selon la revendication 7 ou 8,
**caractérisé en ce que** le passage de conduite, le dispositif de support, le socle et/ou la base de composant (3) sont réalisés de manière optimisée du point de vue de l'écoulement par rapport au flux d'air orienté vers le côté interne de la vitre avant du véhicule (4) ou disposent d'un élément d'habillage réalisé de manière optimisée du point de vue de l'écoulement.

10. Élément d'habitacle (1) selon l'une quelconque des revendications 1 à 9,
**caractérisé en ce que** le boîtier (2) présente, sur un côté tourné vers la vitre avant du véhicule (4), au moins une ouverture (13) pour un élément de capteur (9) de l'au moins un composant fonctionnel électrique ou électronique (8).

11. Élément d'habitacle (1) selon l'une quelconque des revendications 1 à 10,
**caractérisé en ce que** le boîtier (2) présente, dans la région de sortie de l'écoulement (12), une surface de rupture au niveau de laquelle se produit au moins temporairement un décollement pratiquement sans tourbillon de l'écoulement d'air.
